# DEMANDE DE BREVET EUROPEEN

(11) **EP 1 132 187 A1**
(43) Date de publication de la demande: **12.09.2001**
(21) Numéro de dépôt: 01400584.7
(22) Date de dépôt: 06.03.2001
(51) Int. Cl.: B29C 44/34, B29C 44/44, B29B 7/76

(54) **Procédé de réalisation de pièces en matière plastique allégée**

(30) Priorité: 06.03.2000 FR 0002816
(71) Demandeur: Centre d'Etudes et Recherche pour l'Automobile ( CERA), 51100 Reims (FR)
(72) Inventeur: Noirot, Daniel, 02350 Liesse Notre Dame (FR)
(74) Mandataire: Geismar, Thierry

(57) **Abrégé**

L'invention concerne un procédé de réalisation de pièces allégées en mousse de matière plastique thermodurcissable (2), ladite mousse étant obtenue p ar mélange d'au moins deux composants réagissant en une réaction exothermique, ledit procédé comprenant les étapes consistant à :
- introduire des billes (3) en matériau thermoplastique expansible dans lesdits composants, et
- former la mousse de matière plastique thermodurcissable de sorte à provoquer l'expansion desdites billes grâce à la chaleur dégagée par la réaction exothermique,
dans lequel l'introduction desdites billes en matériau thermoplastique est effectuée dans une tête de coulée (4) desdits deux composants.

L'invention concerne également une tête de coulée (4) pour la mise en oeuvre de ce procédé et les pièces ainsi réalisées.

Application à la réalisation de pièces d'automobile.

## Description

La présente invention concerne un procédé de réalisation de pièces allégées en mousse de matière plastique thermodurcissable, une tête de coulée pour la mise en oeuvre de ce procédé et des pièces allégées en mousse de matière plastique thermodurcissable qui comportent au moins une partie comprenant des inclusions en matière thermoplastique expansée.

Les matériaux thermodurcissables, et plus particulièrement les mousses de tels matériaux, sont souvent utilisés pour le remplissage de cavités avec une masse volumique la plus faible possible pour des caractéristiques données. C'est le cas dans le domaine de l'automobile des appuis-tête, des sièges, des tablettes arrière, des panneaux de portières, des sous-tapis...

Il est généralement demandé à ces matériaux de constituer des structures susceptibles de conférer aux pièces réalisées des qualités de stabilité thermique et mécanique, des qualités de souplesse ou de rigidité, et des qualités de compromis poids/performance.

On connaît par ailleurs des matières thermoplastiques qui ont pour caractéristique de pouvoir être très fortement expansées.

Toutefois, leur stabilité thermique est souvent insuffisante pour leur permettre d'être utilisées dans certains domaines tels que celui de l'automobile.

La présente invention vise à fournir un procédé permettant de réaliser des pièces allégées en matière plastique, dont les caractéristiques mécaniques et thermiques permettent l'emploi dans un grand nombre de domaines, et notamment dans l'automobile.

L'invention a encore pour but de fournir des moyens permettant de mettre en oeuvre le procédé précité.

L'invention concerne également des pièces allégées en mousse de matière plastique thermodurcissable qui comportent au moins une partie comprenant des inclusions en matière thermoplastique expansée

A cet effet, l'invention a tout d'abord pour objet un procédé de réalisation de pièces allégées en mousse de matière plastique thermodurcissable, ladite mousse étant obtenue par mélange d'au moins deux composants réagissant en une réaction exothermique, ledit procédé comprenant les étapes consistant à :
- introduire des billes en matériau thermoplastique expansible dans lesdits composants, et
- former la mousse de matière plastique thermodurcissable de sorte à provoquer l'expansion desdites billes grâce à la chaleur dégagée par la réaction exothermique,
dans lequel l'introduction desdites billes en matériau thermoplastique est effectuée dans une tête de coulée desdits deux composants

Un tel procédé permet ainsi d'alimenter simplement et en une seule étape le moule de réaction.

En outre, le procédé, en prévoyant d'utiliser la chaleur dégagée par la réaction exothermique pour expanser les billes, permet une économie notable d'énergie et une réaction en une seule étape.

Bien entendu, on entend ici par « billes » les matériaux thermoplastiques disponibles sur le marché sous une forme compacte prêts à expanser, indépendamment de leur forme géométrique. Ces billes ont généralement un diamètre de l'ordre de 0,3 à 2,5 mm et s'expansent sous l'effet de la chaleur, jusqu'à obtenir des masses volumiques voisines de 20 grammes par litre, les résistances à la compression étant fonction du choix de la matière.

Le procédé selon l'invention peut être mis en oeuvre à partir de billes brutes ou de billes préexpansées.

Plus particulièrement, l'introduction des billes peut être effectuée dans une chambre de mélange de ladite tête.

L'invention a également pour objet une tête de coulée pour la réalisation de pièces allégées en matière plastique thermodurcissable comprenant des moyens de mélange des composants réagissant en une réaction exothermique et des moyens d'alimentation pour amener dans le mélange desdits composants des billes en matériau thermoplastique.

Lesdits moyens d'alimentation peuvent comprendre un conduit débouchant dans une chambre de mélange de la tête de coulée.

Dans un mode de réalisation particulier, ledit conduit est un conduit central coaxial à ladite chambre de mélange.

Selon un troisième aspect, l'invention a pour objet des pièces en mousse de matière plastique thermodurcissable qui comportent au moins une partie comprenant des inclusions en matière thermoplastique expansée.

De telles pièces peuvent ainsi présenter une stabilité thermique et géométrique du même ordre que celles réalisées en matière plastique thermodurcissable, tout en bénéficiant du fait que les inclusions, étant en matière thermoplastique expansée, peuvent avoir une masse volumique extrêmement basse. Il en résulte des pièces qui peuvent être considérablement allégées.

On décrira maintenant, à titre d'exemple non limitatif, un mode de réalisation particulier de l'invention, en référence aux dessins schématiques annexés dans lesquels :
- La figure 1 est une vue partielle en coupe d'une pièce réalisée conformément à l'invention ; et
- La figure 2 est une vue partielle en coupe axiale d'une tête de coulée permettant la réalisation de la pièce de la figure 1.

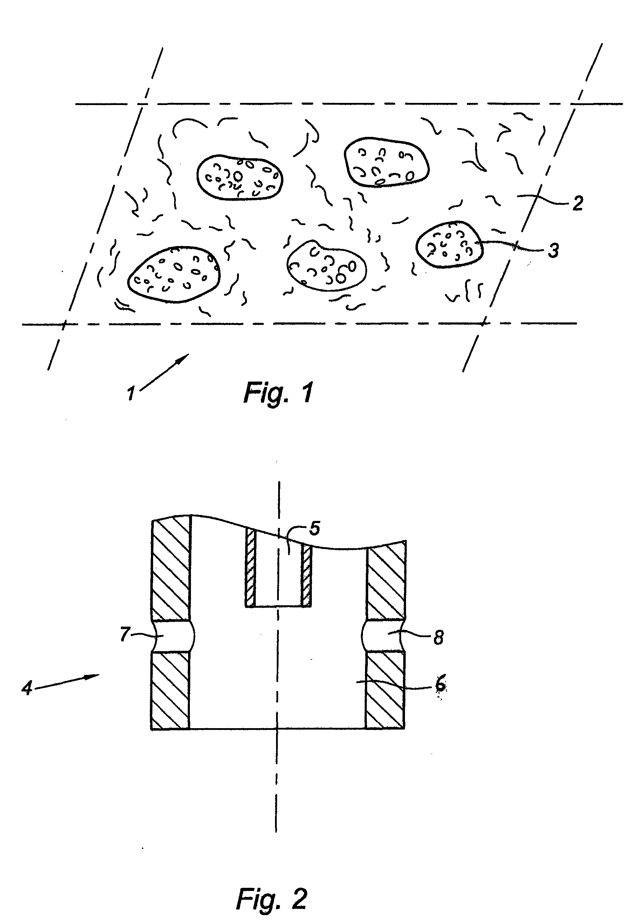

On voit à la figure 1 une pièce moulée 1, par exemple d'une automobile, dans laquelle une matrice 2 en mousse plastique thermodurcissable contient des inclusions 3 en matière thermoplastique expansée.

La matrice 2 est par exemple en mousse de polyuréthanne obtenue par réaction exothermique d'un polyol et d'un isocyanate, et les inclusions 3 sont par exemple en polypropylène ou en polystyrène.

La figure 2 représente une tête de coulée 4 pour le moulage de la pièce 1. Cette tête est cylindrique et munie d'un conduit central 5 débouchant coaxialement dans la chambre de mélange 6. Deux orifices latéraux 7 et 8 permettent l'alimentation de la chambre de mélange.

Les billes expansives sont amenées par le conduit central 5 tandis que les deux composants du polyuréthanne sont amenés respectivement par les orifices 7 et 8. Les billes sont donc incorporées aux deux composants du polyuréthanne dans la chambre de mélange 6.

En variante, les billes peuvent être préchauffées, par exemple à une température de l'ordre de moins de 80°C, préalablement à leur introduction dans la tête de coulée 4.

Cette variante permet de faciliter l'expansion ultérieure des billes sans nuire à leurs qualités finales ni provoquées de préexpansion.

Un piston racleur (non représenté) assure de façon connue le nettoyage de la chambre de mélange 6 après chaque opération de coulée.

La température de réaction est réglée de manière à correspondre à la température d'expansion des billes, par exemple de l'ordre de 80°C à 120°C.

On observera que l'expansion des billes peut, dans un autre mode de réalisation, être postérieure au moulage de la mousse de polyuréthanne. Cette expansion peut alors compenser le retrait naturel de la mousse. On peut en outre obtenir un gradient de dureté croissant vers l'intérieur de la pièce.

On peut également moduler la dureté de la pièce en utilisant localement des billes expansées de dureté supérieure à celle de la mousse, qui suivent les mouvements de cette dernière sans recevoir toute la pression qui les détruirait.

Bien entendu, la pièce peut n'être réalisée que partiellement selon l'invention, par exemple en introduisant à certains emplacements, contrairement au cas précédent, des billes expansibles souples dans une mousse rigide, de manière à procurer un toucher souple à ces emplacements.

## Revendications

1. Procédé de réalisation de pièces allégées en mousse de matière plastique thermodurcissable, ladite mousse étant obtenue par mélange d'au moins deux composants réagissant en une réaction exothermique, ledit procédé comprenant les étapes consistant à :
- introduire des billes en matériau thermoplastique expansible dans lesdits composants, et
- former la mousse de matière plastique thermodurcissable de sorte à provoquer l'expansion desdites billes grâce à la chaleur dégagée par la réaction exothermique,
ledit procédé étant **caractérisé en ce que** l'introduction desdites billes en matériau thermoplastique est effectuée dans une tête de coulée desdits deux composants.

2. Procédé selon la revendication 1, **caractérisé en ce que** ladite introduction est effectuée dans une chambre de mélange (6) de ladite tête.

3. Procédé selon la revendication 1 ou 2, **caractérisé en ce que**, préalablement à leur introduction, les billes sont préchauffées.

4. Tête de coulée pour la mise en oeuvre du procédé selon l'une quelconque des revendications 1 à 3, **caractérisée en ce qu**'elle comprend des moyens (6-8) de mélange des composants réagissant en une réaction exothermique et des moyens d'alimentation (5) pour amener dans le mélange desdits deux composants des billes en matériau thermoplastique.

5. Tête de coulée selon la revendication 4, **caractérisée en ce que** lesdits moyens d'alimentation comprennent un conduit (5) débouchant dans une chambre de mélange (6) de ladite tête.

6. Tête de coulée selon la revendication 5, **caractérisée en ce que** ledit conduit (5) est un conduit central coaxial à ladite chambre de mélange (6).

7. Pièce en mousse de matière plastique thermodurcissable obtenue par la mise en oeuvre du procédé selon l'une quelconque des revendications 1 à 3, **caractérisée en ce qu**'elle comporte au moins une partie comprenant des inclusions (3) en matière thermoplastique expansée.
